(19) Europäisches Patentamt

European Patent Office

Office européen des brevets

(11) **EP 0 769 742 B1**

(12) **FASCICULE DE BREVET EUROPEEN**

(45) Date de publication et mention
de la délivrance du brevet:
**03.04.2002 Bulletin 2002/14**

(51) Int Cl.⁷: $G06F\ 11/14$

(21) Numéro de dépôt: **96202785.0**

(22) Date de dépôt: **07.10.1996**

(54) **Composant électronique à mémoire non volatile effaçable électriquement**

Elektronisches Bauelement mit einem elektrisch löschbaren und nichtflüchtigen Speicher

Electronic component with electrically erasable non-volatile memory

(84) Etats contractants désignés:
**DE ES GB IT NL**

(30) Priorité: **18.10.1995 FR 9512328**

(43) Date de publication de la demande:
**23.04.1997 Bulletin 1997/17**

(73) Titulaire: **SCHLUMBERGER Systèmes
92120 Montrouge (FR)**

(72) Inventeur: **Luck, Xavier
75014, Paris (FR)**

(74) Mandataire: **Lemoyne, Didier
Schlumberger Industries,
Propriété Intellectuelle,
50, avenue Jean Jaurès,
BP 620-04
92542 Montrouge-Cedex (FR)**

(56) Documents cités:
**WO-A-94/24673           FR-A- 2 699 704
US-A- 4 447 887**

**Description**

La présente invention concerne un composant électronique comportant une mémoire non volatile effaçable électriquement.

L'invention trouve une application particulièrement avantageuse dans le domaine des composants électroniques dont l'alimentation électrique est susceptible d'être interrompue de manière intempestive.

On connaît des composants électroniques qui sont munis de mémoires non volatiles effaçables électriquement, telles que EEPROM, flash EPROM, etc. Ces mémoires sont destinées, d'une manière générale, à stocker des informations structurées en entités logiques, à savoir par exemple, des répertoires, des fichiers, etc.

La manière dont sont stockées ces informations est ordonnée par un gestionnaire de mémoire qui doit prendre en compte certaines contraintes physiques, dont l'origine se trouve le plus souvent chez le fabricant des composants, comme la segmentation de la mémoire en "mots" pour la lecture et en "pages" pour l'effacement et l'écriture.

Les "mots" constituent les plus petits ensembles de bits aptes à être lus, il s'agit généralement de mots d'un octet, bien que parfois ils puissent avoir une taille supérieure : 16, voire 32 bits.

Les "pages" forment des entités physiques plus grandes que les mots, et représentent les plus petits ensembles de bits susceptibles d'être effacés et écrits. A titre d'exemple, on trouve des composants organisés en mots d'un octet et en pages de quatre octets, chaque octet pouvant être lu indépendamment, mais l'effacement et l'écriture ne pouvant être réalisés que par page. Dans cette configuration, un octet ne peut être écrit que :

- s'il est vierge ou, plus précisément, si l'état antérieur de l'octet est tel que l'écriture de la nouvelle valeur ne nécessite l'effacement d'aucun bit. Cette situation ne survient généralement que de manière occasionnelle,
- par effacement de l'ensemble de la page, suivie d'une réécriture complète.

Certains de ces composants sont utilisés dans des conditions ou l'alimentation électrique peut être coupée à tout moment. C'est le cas notamment des composants utilisés dans les cartes à mémoire électronique, ou dans les clés à mémoire électronique. C'est également le cas des composants utilisés dans les cartes PCMCIA, et, plus généralement, les composants employés dans des objets détachables, alimentés de l'extérieur.

Dans ces conditions, une interruption de l'alimentation du composant peut survenir à tout moment lors du traitement des informations par le gestionnaire de mémoire. En particulier, si cette interruption se produit pendant l'opération d'effacement-écriture, la donnée en cours d'écriture est perdue. Différentes techniques ont d'ailleurs été proposées pour détecter une telle situation et rétablir un état cohérent de la mémoire. On pourra se référer à cet égard à la demande de brevet français n° 2 699 704.

Cette éventualité a également un autre inconvénient plus lourd de conséquences. Imaginons le cas où une même page comporte deux zones physiques P1 et P2 respectivement allouées à deux entités logiques différentes, complètement indépendantes l'une de l'autre. Si l'on veut modifier les informations contenues dans l'une des zones, P2 par exemple, sans modifier celles contenues dans la zone P1, il faudra d'abord lire les informations contenues dans P1 et P2 et les stocker dans une mémoire vive, puis effacer toute la page et modifier dans ladite mémoire vive les informations relatives à la deuxième entité logique, et enfin écrire dans la même page devenue vierge les informations, non modifiées, relatives à la première entité logique dans P1 et les informations, modifiées, relatives à la deuxième entité logique dans P2. En cas de coupure d'alimentation, les informations dans la zone P2 sont perdues, mais également celles contenues dans la zone P1. Si aucun mécanisme de recouvrement n'est prévu, la perte des informations dans P1 est définitive. Or, les mécanismes de recouvrement supposent une duplication des informations, donc une grande consommation de mémoire. C'est pourquoi il est exceptionnel que toute la mémoire utile d'un composant soit protégée contre les effacements intempestifs.

Aussi, le problème technique à résoudre par l'objet de la présente invention est de proposer un composant électronique comportant une mémoire non volatile effaçable électriquement, destinée à stocker des informations structurées en entités logiques gérées par un gestionnaire de mémoire, ladite mémoire étant segmentée en pages pour l'effacement desdites informations, composant qui permettrait de remédier aux inconvénients mentionnés plus haut, liés à l'effacement global par page, concernant la perte d'informations lors de coupures de l'alimentation électrique du composant.

La solution au problème technique posé consiste, selon la présente invention, telle que revendiquée dans la revendication 1, en ce que ledit gestionnaire de mémoire est programmé pour organiser au moins un type d'entités logiques en pages, chacune desdites entités logiques occupant au moins partiellement et de manière exclusive un nombre entier de pages.

En d'autres termes, les pages affectées auxdites entités logiques d'un ou plusieurs types donnés, comme répertoires, fichiers, etc, ne contiennent que des informations relatives à ces entités logiques à l'exclusion de toute autre.

De cette manière, l'opération de modification des informations implique l'effacement et l'écriture des seules informations que l'on veut modifier, sans avoir à effacer et réécrire les informations que l'on ne veut pas modifier relative à une autre entité logique, d'où la prévention de toute corruption de données.

On a ainsi réalisé une "synchronisation" physique de la mémoire, en ce sens que le découpage des informations logiques correspond au découpage de la mémoire en blocs physiques, ici les pages.

La revendication indépendante 17 propose une revendication de type procédé correspondant à la revendication 1 et la revendication indépendante 18 propose une revendication de type produit de programme d'ordinateur correspondant à la revendication 1. Les revendications indépendantes 16 et 19 proposent deux utilisations particulières du composant de la revendication 1.

Comme cela a déjà été mentionné plus haut, les entités logiques peuvent être de type répertoire, fichier de répertoire, enregistrement de fichier. Elles peuvent avantageusement être également du type en-tête de répertoire ou de fichier, l'objectif étant de garantir que les pages contenant les en-têtes ne soient jamais effacées, sauf pour modifier les données elles-mêmes. Dans ce cas, on peut aussi prévoir une sauvegarde spécifique des en-têtes.

Ce mode de mise en oeuvre de l'invention est particulièrement important. Les données d'en-tête sont en effet très sensibles, toute corruption pouvant entraîner la perte totale d'un fichier ou d'un répertoire, voire d'autres données si un pointeur est modifié.

Les différents types de synchronisation peuvent être combinés entre eux. On pourra par exemple synchroniser les répertoires, les fichiers, les en-têtes, mais pas les enregistrements. On pourra également synchroniser les enregistrements de certains fichiers particulièrement importants, mais pas les enregistrements d'autres fichiers.

Par ailleurs, il sera utile d'adjoindre à la synchronisation un mécanisme de contrôle d'intégrité d'écriture, au sens où ledit gestionnaire de fichier est apte à détecter des corruptions d'informations et à restaurer lesdites informations. Il serait en effet paradoxal d'empêcher des corruptions d'un fichier A lors de l'écriture dans un fichier B, si l'on ne se préoccupe pas de la possibilité de corruption du fichier A lors de l'écriture dans le même fichier A.

Quels que soient le mode de synchronisation et le mécanisme de détection de corruption, l'invention prévoit que le gestionnaire de mémoire est implanté dans le composant avec ladite mémoire. Cette configuration présente plusieurs avantages.

Le premier avantage est la compatibilité. Le système extérieur, qui fait appel à la mémoire, n'a pas à connaître le fonctionnement exact du composant, ni la segmentation en mots et pages, ni la gestion des mécanismes anti-corruption et de la synchronisation. Les dispositifs existants pourront donc utiliser des mémoires avec ou sans synchronisation.

Le second avantage est l'optimisation. Le mécanisme de synchronisation dépend étroitement du fonctionnement physique du composant ainsi que de l'organisation des entités logiques dans la mémoire physique. Le concepteur d'un système extérieur serait moins bien placé que celui du composant lui-même pour optimiser le gestionnaire de mémoire. A titre d'exemple, la taille des en-têtes des fichiers ou des répertoires pourra être optimisée en fonction de la taille des pages. Le concepteur pourra grouper les en-têtes sans les synchroniser avec les pages, mais en prévoyant des mécanismes particuliers de mise à jour. Il pourra, au contraire, notamment si la taille des pages est petite, choisir de synchroniser les en-têtes et simplifier le mécanisme de leur mise à jour. Une solution intermédiaire, si les pages sont grandes, peut être de regrouper plusieurs en-têtes par pages, ce qui conduit à un mécanisme de mise à jour particulier et à une grande économie d'espace.

Le troisième avantage est la sécurité. Le gestionnaire de programme étant implanté dans le composant, il n'est pas possible de corrompre les données par erreur ou accidentellement. On peut en effet rencontrer des configurations où une même mémoire est utilisée par différents systèmes utilisateurs, ces systèmes étant conçus indépendamment les uns des autres. C'est par exemple le cas d'une carte à mémoire utilisée par des terminaux différents, ou d'une carte PCMCIA passant d'un ordinateur à un autre. Il devient alors essentiel que chaque système utilisateur se voit garantir l'intégralité des données de la mémoire. L'implantation du gestionnaire dans le composant est la meilleure solution.

La description qui va suivre en regard du dessin annexé, donné à titre d'exemple non limitatif, fera bien comprendre en quoi consiste l'invention et comment elle peut être réalisée.

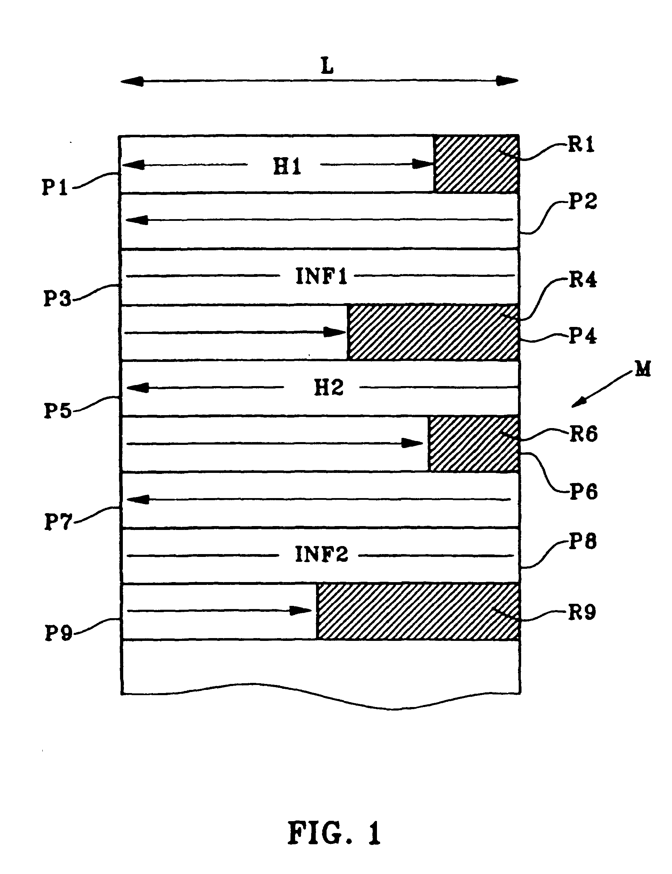

La figure 1 est un schéma d'une mémoire non volatile effaçable électriquement d'un composant électronique selon l'invention.

Le schéma de la figure 1 montre une mémoire M non volatile effaçable électriquement, du type EEPROM ou flash EPROM par exemple, d'un composant électronique dans lequel est également implanté un gestionnaire de ladite mémoire M sous forme d'un microprocesseur avec programme. Avantageusement, la mémoire M et le microprocesseur constituant le gestionnaire de mémoire sont portés par une même pastille semi-conductrice, ou puce.

La mémoire M de la figure 1 est destinée à stocker des informations structurées en entités logiques gérées par ledit gestionnaire de mémoire et qui ont été largement explicitées plus haut.

Par ailleurs, la mémoire M est segmentée en mots d'un octet par exemple pour la lecture des informations, et en pages pour l'effacement desdites informations, l'écriture pouvant également être effectuée par page. On a représenté schématiquement sur la figure 1 des pages P1 à P9 de la mémoire M.

La dimension L de ces pages est variable entre, par exemple, quatre et seize octets.

Comme on peut le voir sur la figure 1, le gestionnaire de mémoire est apte, au moyen d'un programme approprié, à organiser, c'est-à-dire synchroniser, en pages les entités logiques d'un ou plusieurs types donnés, à savoir que chacune desdites entités logiques occupent au moins partiellement et de manière exclusive un nombre entier de pages.

De façon pratique, si d est la taille d'une entité logique pour laquelle la mémoire M est synchronisée, le nombre de pages qu'occupera cette entité logique sera n+ 1 avec :

$$d = nL + r$$

r étant un reste compris entre 1 et L.

A titre d'exemple, la mémoire M de la figure 1 est synchronisée pour des en-têtes H1, H2 de fichiers et pour les données INF1, INF2 des fichiers correspondants. Dans le cas de l'en-tête H1, dont la taille est inférieure à la dimension L des pages, la page P1 est partiellement occupée par les données de H1, le reste de la page P1 étant laissée vierge. On peut donc dire que l'en-tête H1 a une taille logique inférieure à une page et une taille physique d'une page.

En conséquence, les informations suivantes INF1 ne sont pas inscrites par le gestionnaire de mémoire à la suite de l'en-tête H1 à la page P1, mais au début de la page suivante P2. Les données INF1 ont une taille logique comprise entre deux et trois pages et une taille logique de trois pages, la page P4 étant partiellement occupée et le reste R4 de ladite page étant laissée vierge.

Le deuxième en-tête H2 est inscrit par le gestionnaire de mémoire à partir du début de la page P5, et non à la suite de INF1 en page P4, jusqu'à occuper partiellement la page P6, le reste R6 étant laissé vierge. Il en est de même pour les données INF2 occupant les pages P7 et P8 entièrement et la page P9 partiellement, le reste R9 étant laissé vierge.

On comprend, dans ces conditions, que pour modifier les données INF1 par exemple, il faut effacer complètement les pages P2, P3 et P4, puis réécrire dans ces mêmes pages les nouvelles données.

Si, lors de cette opération, le composant électronique est déconnecté intempestivement du système d'alimentation extérieur, seules les données INF1 seront perdues, alors que si l'en-tête H2 était partiellement écrit dans le reste R4 de la page P4 inoccupé par INF1, cette partie d'en-tête de H2 serait également perdue avec toutes les conséquences néfastes qui peuvent en découler.

En variante, on peut prévoir que, dans le cas où une page devrait être partiellement inoccupée, le gestionnaire de mémoire est apte à créer une entité logique dérivée occupant complètement toutes les pages dudit nombre entier de pages.

En d'autres termes, le gestionnaire de mémoire pourrait créer, à partir de l'en-tête H1 de taille logique inférieure à une page, une en-tête H'1, dérivée de H 1, de taille logique égale à une page, taille physique de H1, en concaténant à H 1 le reste vierge R1 de la page P1.

## Revendications

**1.** Composant électronique comportant une mémoire non volatile effaçable électriquement, destinée à stocker des informations structurées en entités logiques gérées par un gestionnaire de mémoire, ladite mémoire étant segmentée en pages pour l'effacement desdites informations, **caractérisé en ce que** ledit gestionnaire de mémoire est programmé pour organiser au moins un type d'entités logiques en pages, chacune desdites entités logiques occupant au moins partiellement et de manière exclusive un nombre entier de pages.

**2.** Composant électronique selon la revendication 1, **caractérisé en ce que** si une page est partiellement occupée, le reste de ladite page est laissée vierge.

**3.** Composant électronique selon la revendication 1, **caractérisé en ce que**, une page devant être partiellement occupée, le gestionnaire de mémoire est apte à créer une entité logique dérivée occupant complètement toutes les pages dudit nombre entier de pages.

**4.** Composant électronique selon l'une quelconque des revendications 1 à 3, **caractérisé en ce que** lesdites entités logiques sont du type répertoire.

**5.** Composant électronique selon l'une quelconque des revendications 1 à 4, **caractérisé en ce que** lesdites entités logiques sont du type fichier.

**6.** Composant électronique selon l'une quelconque des revendications 1 à 5, **caractérisé en ce que** lesdites entités logiques sont du type enregistrement de fichier.

**7.** Composant électronique selon l'une quelconque des revendications 1 à 6, **caractérisé en ce que** lesdites entités logiques sont du type en-tête.

**8.** Composant électronique selon l'une quelconque des revendications 1 à 7, **caractérisé en ce que** le gestionnaire de mémoire est implanté dans le composant avec ladite mémoire.

**9.** Composant électronique selon la revendication 8, **caractérisé en ce que** ledit gestionnaire de mémoire est un microprocesseur avec programme.

**10.** Composant électronique selon la revendication 9, **caractérisé en ce qu'**il est inclus dans une carte à mémoire électronique, ladite mémoire non volatile effaçable électriquement et ledit microprocesseur étant portés par une même pastille semiconductrice.

**11.** Composant électronique selon la revendication 9, **caractérisé en ce qu'**il est inclus dans une clef à mémoire électronique.

**12.** Composant électronique selon la revendication 9, **caractérisé en ce qu'**il est inclus dans une carte PCMCIA.

**13.** Composant électronique selon l'une quelconque des revendications 1 à 12 **caractérisé en ce que** ladite mémoire non volatile effaçable électriquement est du type EEPROM.

**14.** Composant électronique selon l'une quelconque des revendications 1 à 12, **caractérisé en ce que** ladite mémoire non volatile effaçable électriquement est du type flash EPROM.

**15.** Composant électronique selon l'une quelconque des revendications 1 à 14, **caractérisé en ce que** ledit gestionnaire de mémoire est apte à détecter des corruptions d'informations et à restaurer lesdites informations.

**16.** Utilisation du composant électronique selon l'une quelconque des revendications 1 à 15 dans des dispositifs à mémoire électronique alimentés électriquement par un système d'alimentation extérieur et susceptibles d'être déconnectés de manière intempestive dudit système d'alimentation extérieur.

**17.** Procédé de traitement d'information au moyen d'un composant électronique comportant une mémoire non volatile effaçable électriquement, destinée à stocker des informations structurées en entités logiques gérées par un gestionnaire de mémoire, ladite mémoire étant segmentée en pages pour l'effacement desdites informations, **caractérisé en ce que** ledit gestionnaire de mémoire organise au moins un type d'entités logiques en pages de façon à ce que chacune desdites entités logiques occupent au moins partiellement et de manière exclusive un nombre entier de pages.

**18.** Produit de programme d'ordinateur pour un composant électronique comportant une mémoire non volatile effaçable électriquement, destinée à stocker des informations structurées en entités logiques gérées par un gestionnaire de mémoire, ladite mémoire étant segmentée en pages pour l'effacement desdites informations, **caractérisé en ce que** le produit de programme d'ordinateur comprend un jeu d'instructions qui, quand le jeu d'instructions est chargé dans le composant électronique amène ledit gestionnaire de mémoire à organiser au moins un type d'entités logiques en pages de façon à ce que chacune desdites entités logiques occupent au moins partiellement et de manière exclusive un nombre entier de pages.

**19.** Dispositif de traitement d'information **caractérisé en ce que** le dispositif de traitement d'information comprend un composant électronique selon l'une quelconque des revendications 1 à 15.

**20.** Dispositif de traitement d'information selon la revendication 19 **caractérisé en ce que** le dispositif de traitement d'information est sous forme d'une carte à mémoire éléctronique.

**21.** Dispositif de traitement d'information selon la revendication 19 **caractérisé en ce que** le dispositif de traitement d'information est sous forme d'une carte PCMCIA.

**Patentansprüche**

**1.** Elektronische Komponente mit einem elektrisch löschbaren nichtflüchtigen Speicher zur Speicherung der in logischen Elementen strukturierten Informationen, welche von einem Memory-Manager verwaltet werden, wobei besagter Speicher zum Löschen besagter Informationen insbesondere in Seiten segmentiert ist, **dadurch gekennzeichnet, dass** besagter Memory-Manager zur Organisation von mindestens einem Typ logischer Elemente in Seiten programmiert ist und jedes der besagten logischen Elemente mindestens teilweise und ausschliesslich ganzzahlige Seiten belegt.

**2.** Elektronische Komponente gemäss Patentanspruch 1, **dadurch gekennzeichnet, dass** eine Seite teilweise belegt ist, während der Rest besagter Seite leer gelassen ist.

**3.** Elektronische Komponente gemäss Patentanspruch 1, **dadurch gekennzeichnet, dass** eine Seite teilweise belegt sein muss und der Memory-Manager in der Lage ist, ein abgeleitetes logisches Element zu erstellen, welches alle Seiten der besagten ganzzahligen Seiten vollständig belegen kann.

**4.** Elektronische Komponente gemäss einem beliebigen Patentanspruch 1 bis 3, **dadurch gekennzeichnet, dass** besagte logische Elemente vom Typ Verzeichnis sind.

5. Elektronische Komponente gemäss einem beliebigen Patentanspruch 1 bis 4, **dadurch gekennzeichnet, dass** besagte logische Elemente vom Typ Datei sind.

6. Elektronische Komponente gemäss einem beliebigen Patentanspruch 1 bis 5, **dadurch gekennzeichnet, dass** besagte logische Elemente vom Typ Dateiaufzeichnung sind.

7. Elektronische Komponente gemäss einem beliebigen Patentanspruch 1 à 6, **dadurch gekennzeichnet, dass** besagte logische Elemente vom Typ Kopfdaten sind.

8. Elektronische Komponente gemäss einem beliebigen Patentanspruch 1 bis 7, **dadurch gekennzeichnet, dass** der Memory-Manager in die Komponente mit besagtem Speicher montiert ist.

9. Elektronische Komponente gemäss Patentanspruch 8, **dadurch gekennzeichnet, dass** besagter Memory-Manager ein Mikroprozessor mit Programm ist.

10. Elektronische Komponente gemäss Patentanspruch 9, **dadurch gekennzeichnet, dass** sie in eine elektronische Speicherkarte integriert ist, wobei besagter elektrisch löschbarer nichtflüchtiger Speicher und besagter Mikroprozessor von demselben Halbleiterchip getragen werden.

11. Elektronische Komponente gemäss Patentanspruch 9, **dadurch gekennzeichnet, dass** sie in einen Schlüssel mit elektronischem Speicher integriert ist.

12. Elektronische Komponente gemäss Patentanspruch 9, **dadurch gekennzeichnet, dass** sie in eine PCMCIA-Karte integriert ist.

13. Elektronische Komponente gemäss einem beliebigen Patentanspruch 1 bis 12, **dadurch gekennzeichnet, dass** besagter elektrisch löschbarer nichtflüchtiger Speicher vom Typ EEPROM ist.

14. Elektronische Komponente gemäss einem beliebigen Patentanspruch 1 bis 12, **dadurch gekennzeichnet, dass** besagter elektrisch löschbarer nichtflüchtiger Speicher vom Typ Flash-EPROM ist.

15. Elektronische Komponente gemäss einem beliebigen Patentanspruch 1 bis 14, **dadurch gekennzeichnet, dass** beliebiger Memory-Manager in der Lage ist, Informationsverstümmelungen zu erfassen und besagte Informationen wiederherzustellen.

16. Anwendung der elektronischen Komponente gemäss einem beliebigen Patentanspruch 1 bis 15 in Vorrichtungen mit über ein externes Versorgungssystem elektrisch gespeisten elektronischem Speicher und welche von besagtem externen Versorgungssystem ungewollt getrennt werden können.

17. Informationsverarbeitungsverfahren mittels einer elektronischen Komponente mit einem elektrisch löschbaren nichtflüchtigen Speicher zur Speicherung der in logischen Elementen strukturierten Informationen, welche von einem Memory-Manager verwaltet werden, wobei besagter Speicher in Seiten zum Löschen besagter Informationen segmentiert ist, **dadurch gekennzeichnet, dass** besagter Memory-Manager mindestens einen Typ logischer Elemente in Seiten organisiert, so dass jeder der besagten logischen Elemente mindestens teilweise und ausschliesslich ganzzahlige Seiten belegt.

18. Computerprogrammprodukt für eine elektronische Komponente mit einem elektrisch löschbaren nichtflüchtigen Speicher zur Speicherung der in logischen Elementen strukturierten Informationen, welche von einem Memory-Manager verwaltet werden, wobei besagter Speicher in Seiten zum Löschen besagter Informationen segmentiert ist, **dadurch gekennzeichnet, dass** das Computerprogrammprodukt einen Satz Anweisungen enthält, welcher, wenn der Satz Anweisungen in der elektronischen Komponente geladen ist, besagten Memory-Manager veranlasst, mindestens einen Typ logischer Elemente in Seiten zu organisieren, so dass jedes der besagten logischen Elemente mindestens teilweise und ausschliesslich eine Ganzzahl von Seiten belegt.

19. Informationsverarbeitungsvorrichtung, **dadurch gekennzeichnet, dass** die Informationsverarbeitungsvorrichtung eine elektronische Komponente gemäss einem beliebigen Patentanspruch 1 bis 15 enthält.

20. Informationsverarbeitungsvorrichtung gemäss Patentanspruch 19, **dadurch gekennzeichnet, dass** die InformationsverarbeitungsVorrichtung die Form einer Karte mit elektronischem Speicher hat.

21. Informationsverarbeitungsvorrichtung gemäss Patentanspruch 19, **dadurch gekennzeichnet, dass** die InformationsverarbeitungsVorrichtung die Form einer PCMCIA-Karte hat.

## Claims

1. Electronic component with an electrically erasable non volatile memory, intended to store information structured in logical entities managed by a memory manager, the said memory being in particular segmented into pages to delete the said information, **characterised in that** the said memory manager is programmed to organise at least one type of logical entity in pages, each of the said logical entities occupying at least partially and exclusively a whole number of pages.

2. Electronic component according to claim 1, **characterised in that** if a page is partially occupied, the remainder of the said page is left blank.

3. Electronic component according to claim 1, **characterised in that**, if a page should be partially occupied, the memory manager could create a derived logical entity completely occupying all the pages of the said whole number of pages.

4. Electronic component according to any one of the claims 1 to 3, **characterised in that** the said logical entities are of directory type.

5. Electronic component according to any one of the claims 1 to 4, **characterised in that** the said logical entities are of file type.

6. Electronic component according to any one of the claims 1 to 5, **characterised in that** the said logical entities are of file record type.

7. Electronic component according to any one of the claims 1 to 6, **characterised in that** the said logical entities are of header type.

8. Electronic component according to any one of the claims 1 to 7, **characterised in that** the memory manager is located in the component with the said memory.

9. Electronic component according to claim 8, **characterised in that** the said memory manager is a microprocessor with program.

10. Electronic component according to claim 9, **characterised in that** it is included in an electronic memory card, the said electrically erasable non volatile memory and the said microprocessor are included in the same semiconductor chip.

11. Electronic component according to claim 9, **characterised in that** it is included in an electronic memory key.

12. Electronic component according to claim 9, **characterised in that** it is included in a PCMCIA card.

13. Electronic component according to any of the claims 1 to 12, **characterised in that** the said electrically erasable non volatile memory is of type EEPROM.

14. Electronic component according to any of the claims 1 to 12, **characterised in that** the said electrically erasable non volatile memory is of type flash EPROM.

15. Electronic component according to any of the claims 1 to 14, **characterised in that** the said memory manager can detect information corruptions and restore the said information.

16. Use of the electronic component according to any one of the claims 1 to 15, in electronic memory devices supplied electrically by an external power supply system and likely to suffer untimely interruptions of the said external power supply system.

17. Information processing method using an electronic component with an electrically erasable non volatile memory, intended to store information structured in logical entities managed by a memory manager, the said memory being segmented into pages to delete the said information, **characterised in that** the said memory manager organises at least one type of logical entity in pages, so that each of the said logical entities occupies at least partially and exclusively a whole number of pages.

18. Computer program product for an electronic component with an electrically erasable non volatile memory, intended to store information structured in logical entities managed by a memory manager, the said memory being segmented into pages to delete the said information, **characterised in that** the computer program product includes a set of instructions which, when the set of instructions is loaded in the electronic component, enables the said memory manager to organise at least one type of logical entities in pages so that each of the said logical entities occupies at least partially and exclusively a whole number of pages.

19. Information processing device **characterised in that** the information processing device includes an electronic component according to any one of the claims 1 to 15.

20. Information processing device according to claim 19 **characterised in that** the information processing device is in the form of an electronic memory card.

21. Information processing device according to claim 19 **characterised in that** the information processing device is in the form of a PCMCIA card.

**FIG. 1**